# EUROPÄISCHE PATENTSCHRIFT

(11) **EP 1 407 930 B1**
(45) Veröffentlichungstag und Bekanntmachung des Hinweises auf die Patenterteilung: **07.11.2007**
(21) Anmeldenummer: 03015850.5
(22) Anmeldetag: 11.07.2003
(51) Int. Cl.: B60Q 1/14, H01H 25/06

(54) **Elektrischer Dreh- und Schubschalter**
Electrical rotary push switch
Commutateur électrique rotatif à poussoir

(30) Priorität: 10.10.2002 DE 10247342
(43) Veröffentlichungstag der Anmeldung: 14.04.2004
(73) Patentinhaber: Valeo Schalter und Sensoren GmbH, 74321 Bietigheim-Bissingen (DE)
(72) Erfinder: Simonis, Karl, 75428 Illingen (DE); Hecht, Walter, 74321 Bietigheim-Bissingen (DE); Klein, Rudolf, 74348 Lauffen a.N. (DE); Lipfert, Rainer, 74076 Heilbronn (DE)
(74) Vertreter: Dreiss, Fuhlendorf, Steimle & Becker

(56) Entgegenhaltungen:
- DE-C1- 19 723 482
- US-A- 5 610 378

## Beschreibung

Die Erfindung betrifft einen elektrischen Dreh- und Schubschalter, insbesondere für ein Fahrzeug, mit wenigstens einem an einem Gehäuse um die Gehäuselängsachse drehbar und parallel zur Gehäuselängsachse verschiebbar gelagerten Betätigungsglied, mit wenigstens einem im Gehäuse gelagerten Drehkontaktteil und einem im Gehäuse gelagerten Schubkontaktteil, wobei das Drehkontaktteil bei einer Drehbewegung des Betätigungsgliedes gegenüber einer Kontaktierungsebene axial verstellt wird und das Schubkontaktteil bei einer Schubbewegung des Betätigungsgliedes gegenüber der Kontaktierungsebene axial verstellt wird.

Ein derartiger Schalter ist gemäß dem Oberbegriff des Anspruchs 1 beispielsweise aus der DE 197 23 482 C1 bekannt geworden. Das Schubkontaktteil und das Drehkontaktteil sind dabei entlang einer Linie hintereinander angeordnet. Dabei weist das Schubkontaktteil einen sich in radialer Richtung erstreckenden Steg auf, dessen freies, der Kontaktierungsebene abgewandtes Ende in einer konzentrisch zur Gehäuselängsachse verlaufenden Steuerbahn des Betätigungsgliedes angeordnet ist. Bei einer Schubbewegung des Betätigungsgliedes neigt das Schubkontaktteil aufgrund des relativ großen Abstandes zwischen der Kontaktierungsebene und der Steuerbahn zum Verkanten. Außerdem neigt das Schubkontaktteil beim Drehen des Betätigungsteils aufgrund der in der Steuerbahn vorhandenen Reibung zum Kippen um die Gehäuselängsachse. Zudem baut der vorbekannte Schalter relativ groß.

Der vorliegenden Erfindung liegt die Aufgabe zugrunde, einen elektrischen Dreh- und Schubschalter bereitzustellen, der die genannten Nachteile des bekannten Standes der Technik überwindet. Insbesondere soll ein Schalter bereitgestellt werden, bei dem ein Verkanten des Schubkontaktteils möglichst ausgeschlossen wird, wobei der Schalter dauerhaft leichtgängig und funktionssicher betätigbar sein soll. Der Schalter soll außerdem kompakt bauen.

Diese Aufgabe wird durch einen elektrischen Dreh- und Schubschalter der eingangs beschriebenen Art erfindungsgemäß dadurch gelöst, dass zur axialen Verstellung das Schubkontaktteil in einem der Kontaktierungsebene nahe gelegenen Bereich direkt von dem Betätigungsglied, oder indirekt über einen Mitnehmer, beaufschlagt wird. Idealerweise greift das Betätigungsglied, oder der Mitnehmer, das Schubkontaktteil im Bereich der Kontaktierungsebene an. Hierdurch wird erreicht, dass ein Kippen des Schubkontaktteils beim axialen Verstellen weitgehend ausgeschlossen wird. Die Funktionsgenauigkeit und die Leichtgängigkeit des Dreh- und Schubschalters wird dadurch erhöht. Eine Steuerbahn zum Verstellen des Schubkontaktteils und ein in der Steuerbahn geführter Steg, wie sie im bekannten Stand der Technik vorgesehen sind, ist erfindungsgemäß nicht erforderlich. Der erfindungsgemäße Schalter baut deshalb sehr kompakt. Das Verstellen des Schubkontaktteils erfolgt vorteilhafterweise an der in axialer Richtung gelegenen, dem Betätigungsglied, oder dem Mitnehmer, zugewandten Seite des Schubkontaktteils.

Ob das Betätigungsglied direkt das Schubkontaktteil beaufschlagt oder ob das Betätigungsglied indirekt über einen Mitnehmer das Schubkontaktteil beaufschlagt, hängt von der jeweiligen Ausführungsform des Schalters ab. Entscheidender Punkt der Erfindung ist, dass das Schubkontaktteil nahe der Kontaktierungsebene beaufschlagt wird, wodurch ein Kippmoment am Schubkontaktteil weitgehend, und idealerweise vollständig, ausgeschlossen wird.
Vorteilhafterweise weist das Schubkontaktteil auf der dem Betätigungsglied, oder dem Mitnehmer, zugewandten Seite einen in axialer Richtung, die Kontaktierungsebene überragenden, Vorsprung auf. Dieser Vorsprung steht in Schubverbindung mit dem Betätigungsglied bzw. mit dem Mitnehmer. Das Vorsehen eines solchen Vorsprunges hat den Vorteil, dass das Beaufschlagen des Schubkontaktteils nicht in axialer Richtung gesehen, ober- bzw. unterhalb der Kontaktierungsebene erfolgt. Dabei ist vorteilhaft, wenn der Vorsprung in radialer Richtung hin zur Kontaktierungsebene ausgebildet ist. Die Ausbildung des Vorsprunges kann hierbei auch so sein, dass der Vorsprung in der Kontaktierungsebene liegt oder sie hinterragt. Hierdurch kann das Schubkontaktteil nahe der Kontaktierungsebene beziehungsweise beim Hinterragen der Kontaktierungsebene, in der Ebene der Kontaktierungsebene, von dem Betätigungsglied, beziehungsweise dem Mitnehmer, beaufschlagt werden. Eine unerwünschte Hebelwirkung, die zu einem unerwünschten Verkanten des Schubkontaktteils führen könnte, entfällt dann weitgehend.

Eine weitere, vorteilhafte Ausgestaltung der Erfindung zeichnet sich dadurch aus, dass die Kontaktierungsebene im Bereich der Gehäuselängsachse liegt, wobei das Betätigungsglied, oder der Mitnehmer, einen in axialer Richtung verlaufenden Vorsprung zur Beaufschlagung des Schubkontaktteils, beziehungsweise zur Beaufschlagung des Vorsprunges des Schubkontaktteils, aufweist. Durch eine derartige Ausführungsform ergeben sich symmetrische Schaltkräfte, die zu einer günstigen und langlebigen Funktionsweise des Schalters beitragen.

Eine weitere Ausführungsform zeichnet sich dadurch aus, dass zwischen dem Betätigungsglied und dem Schubkontaktteil der Mitnehmer vorgesehen ist, der mit dem Betätigungsglied dreh- und schubgekoppelt und mit dem Schubkontaktteil lediglich schubgekoppelt ist. Das Vorsehen eines derartigen Mitnehmers kann zu einer vereinfachten und flexibleren Montage des Schalters führen.

Ferner ist erfindungsgemäß denkbar, dass das Betätigungsglied oder der Mitnehmer auf seiner dem Schubkontaktteil zugewandten Seite einen sich in axialer Richtung erstreckenden Anlageabschnitt aufweist, an dem ein diesem Anlageabschnitt zugewandter Anlageabschnitt des Schubkontaktteils anliegt, wobei das Schubkontaktteil bei Drehbewegung des Betätigungsgliedes unbeeinflusst bleibt. Beim Drehen des Betätigungsgliedes dreht sich folglich der Anlageabschnitt des Betätigungsgliedes beziehungsweise des Mitnehmers gegen den Anlageabschnitt des Schubkontaktteils. Zwischen den beiden Anlageabschnitten kann eine Punkt-, Linien- oder Flächenberührung stattfinden. Dabei kann der eine und/oder der andere Anlageabschnitt eine senkrecht zur Gehäuselängsachse verlaufende Anlagefläche aufweisen.

Erfindungsgemäß ist ferner vorteilhaft, wenn das Schubkontaktteil auf der dem Anlageabschnitt abgewandten Seite von einem Federelement gegen das Betätigungsglied oder den Mitnehmer federbeaufschlagt angeordnet ist. Dabei ist denkbar, eine Feder vorzusehen, die sich einerends am Gehäuse abstützt und andererends gegen das Schubkontaktteil wirkt. Durch die Feder wird das Schubkontaktteil in seiner jeweiligen Position spielfrei gehalten. Durch ein derartiges spielfreies Halten werden außerdem Klappergeräusche des Schubkontaktteils unterbunden.

Bei einer weiteren Ausführungsform der Erfindung ist vorgesehen, dass der Mitnehmer eine Verzahnung aufweist, die mit einer Gegenverzahnung eines. Funktionselements drehgekoppelt und nicht schubgekoppelt ist, wobei das Funktionselement eine schraubenlinienförmige Steuerbahn aufweist, die mit einem am Drehkontaktteil vorgesehenen Steuerzapfen zusammenwirkt. Die Verzahnung beziehungsweise die Gegenverzahnung kann beispielsweise als Steg beziehungsweise als mit dem Steg zusammenwirkende, nutartige Zahnlücke ausgebildet sein.

Ein derartiges Funktionselement kann beispielsweise hülsenartig ausgebildet sein, wobei das Funktionselement das Schubkontaktteil so umgibt, dass es beim Drehen des Betätigungsgliedes unbeeinflusst bleibt. Durch diese Anordnung kann der erfindungsgemäße Schalter sehr kompakt realisiert werden.

Um einen sehr kompakten, und dennoch funktionssicheren Dreh- und Schubschalter zu realisieren, kann erfindungsgemäß vorgesehen sein, dass Schaltkontakte des Schubkontaktteils eine auf der einen Seite einer im Gehäuse angeordneten Leiterplatte liegende Kontaktierungsebene und Schaltkontakte des Drehkontaktteils eine auf der anderen Seite der Leiterplatte liegende Kontaktierungsebene kontaktieren. Die Leiterplatte, die vorteilhafterweise entlang der Gehäuselängsachse angeordnet ist, kann hierdurch sehr klein ausfallen. Beide Seiten der Leiterplatte werden als Kontaktierungsebenen genutzt. Dabei ergibt sich eine sehr kompakte, und dennoch funktionssichere Anordnung, wenn das Schubkontaktteil dem Drehkontaktteil gegenüberliegend angeordnet ist.

Ferner kann erfindungsgemäß vorgesehen sein, dass zusätzlich zu dem Betätigungsglied ein gegenüber dem Gehäuse um die Gehäuselängsachse drehbar gelagerter Betätigungsabschnitt vorgesehen ist, der mit einem zweiten Drehkontaktteil derart drehgekoppelt ist, dass das zweite Drehkontaktteil bei Drehbewegung des Betätigungsabschnitts axial verstellt wird. Ein derartiger Schalter weist folglich einen unabhängig von dem Betätigungsglied verdrehbaren Betätigungsabschnitt auf. Mit einem derartigen Dreh- und Schubschalter können folglich zusätzliche Schaltaufgaben bewältigt werden.

Dabei ist vorteilhaft, wenn das zweite Drehkontaktteil auf der gleichen Kontaktierungsebene angeordnet ist wie das erste Drehkontaktteil. Die beiden Drehkontaktteile können hierbei hintereinander, entlang einer Linie angeordnet sein.

Entsprechend dem Betätigungsglied ist vorteilhaft, wenn der Betätigungsabschnitt eine Verzahnung aufweist, die mit einer Gegenverzahnung eines zweiten Funktionselements drehgekoppelt und nicht schubgekoppelt ist, wobei das zweite Funktionselement eine schraubenlinienförmige Steuerbahn aufweist, die mit einem am zweiten Drehkontaktteil vorgesehenen Steuerzapfen zusammenwirkt.

Eine weitere vorteilhafte Ausführungsform der Erfindung zeichnet sich dadurch aus, dass das Funktionsteil wenigstens eine sich in axialer Richtung erstreckende Rastnase beziehungsweise Rastkontur aufweist, die mit wenigstens einer Rastkontur beziehungsweise Rastnase eines axial verschiebbar, nicht drehbar und unter Federvorspannung angeordneten Stellrings zusammenwirkt. Durch das Zusammenspiel von Rastnase und Rastkontur kann das Funktionsteil, und damit das entsprechende Drehkontaktteil, in einer vorgegebenen Schaltstellung gehalten werden.

Dabei ist vorteilhaft, wenn der Stellring von einem sich am Gehäuse abstützenden Federelement vorgespannt wird und wenn der Stellring auf seiner radialen Innenseite axiale Führungsstege aufweist, die in am Gehäuse vorgesehenen axialen Führungsnuten angeordnet sind.

Weitere vorteilhafte Einzelheiten und Ausführungsformen der Erfindung sind der nachfolgenden Beschreibung zu entnehmen, in der die Erfindung anhand des in der Zeichnung dargestellten Ausführungsbeispiels näher beschrieben und erläutert ist.

Es zeigen:

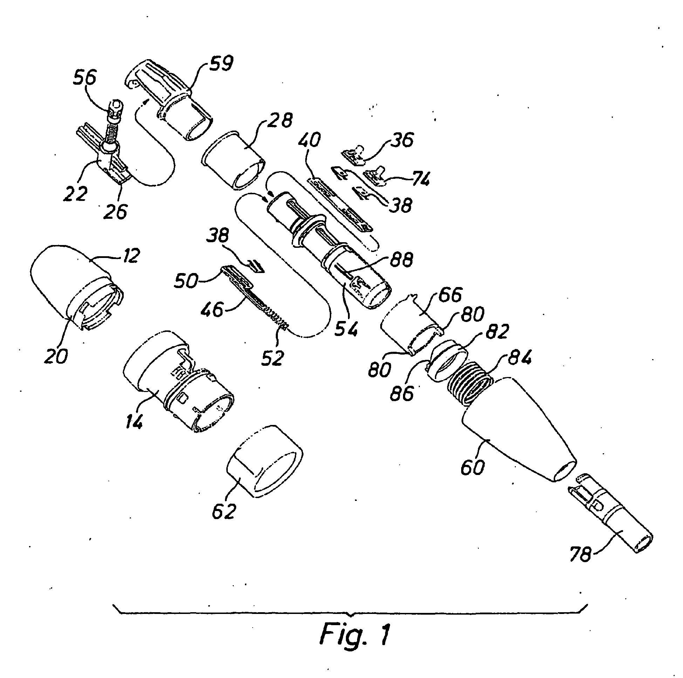

- Figur 1: einen erfindungsgemäßen Dreh- und Schubschalter in Explosionsdarstellung;

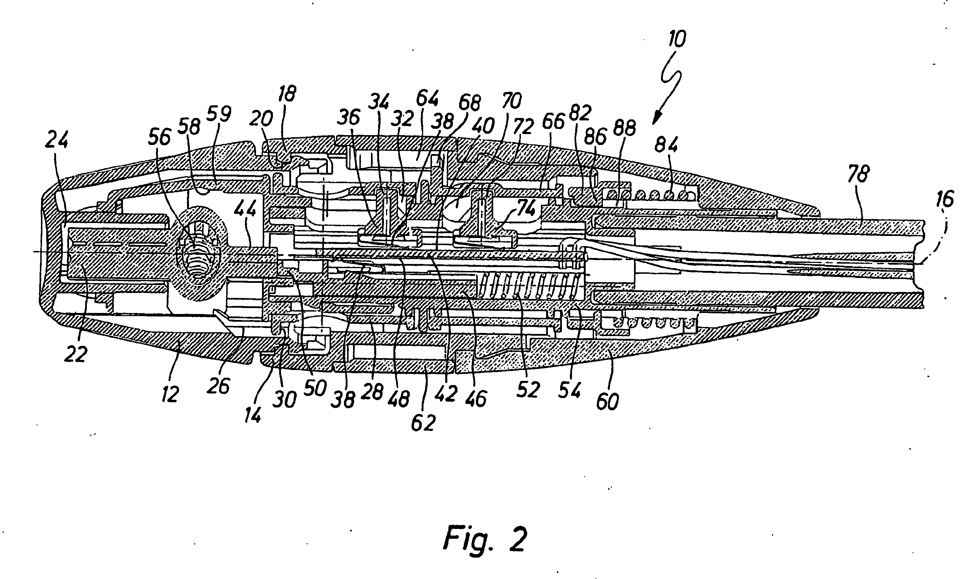

- Figur 2: den Schalter gemäß Figur 1 im Längsschnitt; und

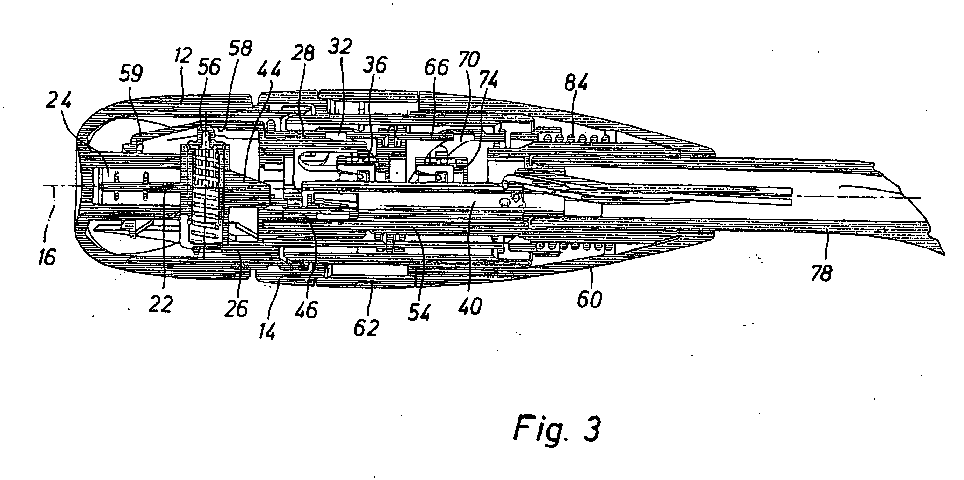

- Figur 3: den Schalter gemäß Figur 1 in einer zu Figur 2 unterschiedlichen Schnittebene.

Der in den Figuren gezeigte Dreh- und Schubschalter 10 umfasst ein Betätigungsglied 12, das an einem Gehäuseabschnitt 14 um die Gehäuselängsachse 16 drehbar gelagert angeordnet ist. Die drehbare Lagerung wird durch einen am Gehäuseabschnitt 14 angeordneten Ringbund 18 realisiert, der in eine am Betätigungsglied 12 angeordnete umlaufende Führungsnut 20 eingreift.

Das Betätigungsglied 12 ist mit einem Mitnehmer 22 drehund schubgekoppelt. Dazu weist das Betätigungsglied 12 im Bereich der Längsachse 16 eine nicht rotationssymmetrische Aufnahme 24 auf, in die der Mitnehmer 22 abschnittsweise formschlüssig eingesteckt ist. Denkbar wäre auch, das Betätigungsglied 12 einteilig mit dem Mitnehmer 22 auszubilden. Der Mitnehmer 22 weist einen radial außen liegenden, sich in axialer Richtung erstreckenden Steg 26 auf, der weitgehend formschlüssig in eine an einem Funktionselement 28 vorgesehene, sich in axialer Richtung erstreckende Nut 30 eingreift. Dadurch wird erreicht, dass beim Verdrehen des Betätigungsgliedes 12 das Funktionselement mit verdreht wird. Beim axialen Verschieben des Betätigungsgliedes 12 bleibt das Funktionselement 28 jedoch unbeeinflusst. Das Funktionselement 28, das hülsenartig ausgebildet ist, weist auf seiner radialen Innenseite eine schraubenlinienförmige Steuerbahn 32 auf. In diese Steuerbahn 32 ragt ein Steuerzapfen 34 eines axial verstellbaren Drehkontaktteils 36. Beim Verdrehen des Betätigungsgliedes 12, beziehungsweise des Funktionsteils 28, wird das Drehkontaktteil 36 folglich in axialer Richtung verstellt. Das Drehkontaktteil 36 weist Kontaktfedern 38 auf, die eine Kontaktierungsebene 40 einer Leiterplatte 42 beaufschlagen.

Wird das Betätigungsglied 12 in axialer Richtung auf Schub betätigt, so wirkt die dem Betätigungsglied 12 beziehungsweise der Aufnahme 24 abgewandte Seite 44 gegen ein im Schalter 10 axial verschiebbar gelagertes Schubkontaktteil 46. Diese Seite 44 des Mitnehmers ragt im Bereich der Gehäuselängsachse 16 in Richtung des Schubkontaktteils 46. Das Schubkontaktteil 46 weist, entsprechend dem Drehkontaktteil 36, Kontaktfedern 38 auf, die eine Kontaktierungsebene 48 der Leiterplatte 42 beaufschlagen, die der Kontaktierungsebene 40 gegenüberliegt. Das Schubkontaktteil 46 sieht auf seiner dem Mitnehmer 22 zugewandten Seite einen die Kontaktierungsebene 48 in axialer Richtung überragenden Vorsprung 50 auf, der in radialer Richtung hin zu der Ebene ausgerichtet ist, in der die Kontaktierungsebene 48 liegt. Der Vorsprung 50 liegt dabei in einem der Kontaktierungsebene 48 nahe gelegenen Bereich und wird vom Mitnehmer 22 schubbeaufschlagt. Auf der dem Vorsprung 50 abgewandten Seite wird das Schubkontaktteil 46 von einer Schraubenfeder 52 beaufschlagt, die sich an einem Vorsprung eines Gehäuseteils 54 abstützt. Wird das Betätigungsglied 12 in axialer Richtung betätigt, so beaufschlagt der Mitnehmer 22 das Schubschaltteil 46 gegen die Vorspannkraft der Feder 52. Dadurch, dass die Beaufschlagung des Schubkontaktteils 46 am Vorsprung 50 nahe der Kontaktierungsebene 48 erfolgt, wirken nahezu keine Kippmomente auf das Schubkontaktteil 46. Außerdem kann der Bauraum um das Schubkontaktteil 46 für andere Bauteile des Schalters, beispielsweise für das Funktionselement 28, verwendet werden. Dadurch lässt sich eine sehr kompakte Bauweise des Schalters 10 ermöglichen und das Drehkontaktteil 36 kann beispielsweise auf der dem Schubkontaktteil 46 gegenüberliegenden Seite der Leiterplatte 42 angeordnet sein.

Beim Verdrehen des Betätigungsgliedes dreht sich die dem Vorsprung 50 zugewandte Seite 44 des Mitnehmers 22 gegen die dem Mitnehmer 22 zugewandte Seite des Vorsprungs 50. Die Schaltstellung des Schubkontaktteils bleibt hierdurch unbeeinträchtigt.

Um das Betätigungsglied 12 in vorgegebenen Schaltstellungen zu halten, ist am Mitnehmer 22 ein federbeaufschlagter Schaltnocken 56 vorgesehen, der gegen eine gehäuseseitige Schaltkulisse 58 wirkt, die in einen Gehäuseabschnitt 59 eingeformt ist.

Der Dreh- und Schubschalter 10 weist einen gegenüber dem Gehäuseabschnitt 14, beziehungsweise einem weiteren Gehäuseabschnitt 60, um die Längsachse 16 drehbar gelagerten Betätigungsabschnitt 62 auf. Der ringförmig ausgebildete Betätigungsabschnitt 62 sieht an seiner radialen Innenseite eine Verzahnung in Form eines sich in axialer Richtung erstreckenden Steges 64 vor. Der Steg 64 greift in eine an einem Funktionselement 66 vorgesehene Lücke 68 ein. Das Funktionselement 68 ist folglich mit dem Betätigungsabschnitt 62 drehgekoppelt, wobei eine axiale Verschiebung des Betätigungsabschnitts 62, zusammen mit dem Betätigungselement 12 und den Gehäuseabschnitten 14 und 60, keinen Einfluss auf das Funktionselement 66 haben. Das hülsenförmig ausgebildete Funktionselement 66 weist an seiner radialen Innenseite eine schraubenlinienförmige Steuerbahn 70 auf. Die Steuerbahn 70 ist mit einem Steuerzapfen 72 eines zweiten Drehkontaktteils 74 gekoppelt. Das Drehkontaktteil 74 entspricht dem Drehkontaktteil 36 und ist auf der gleichen Seite der Leiterplatte 42 angeordnet wie das Drehkontaktteil 36. Zur axialen Führung der Drehkontaktteile 36, 74 dient das zentral angeordnete Gehäuseteil 54, das an dem freien Ende eines Schalthebels 78 eines nicht dargestellten Lenkstockschalters eines Fahrzeuges angeordnet ist.

Zur Realisierung von vorgegebenen Schaltstellungen des Betätigungsabschnitts 62 sieht das Funktionselement 66 an seiner dem Funktionselement 28 abgewandten Stirnseite sich in axialer Richtung erstreckende Rastnasen 80 vor, die mit Rastkonturen eines axial verschiebbaren, nicht drehbaren und unter Federvorspannung angeordneten, als Rastkrone ausgebildeten Stellrings 82, zusammenwirken. Der Stellring 82 wird von einem sich am Gehäuse abstützenden Federelements 84 gegen das Funktionselement 66 vorgespannt. Um eine Drehung des Stellrings 82 zu unterbinden, weist der Stellring 82 auf seiner radialen Innenseite axiale Führungsstege 86 auf, die in am Gehäuseabschnitt 54 vorgesehenen, axialen Führungsnuten 88 verlaufen.

## Patentansprüche

1. Elektrischer Dreh- und Schubschalter (10), insbesondere für ein Fahrzeug, mit wenigstens einem an einem Gehäuse um die Gehäuselängsachse (16) drehbar und parallel zur Gehäuselängsachse (16) verschiebbar gelagerten Betätigungsglied (12), mit wenigstens einem im Gehäuse gelagerten Drehkontaktteil (36) und einem im Gehäuse gelagerten Schubkontaktteil (46), wobei das Drehkontaktteil (36) bei einer Drehbewegung des Betätigungsgliedes (12) gegenüber einer Kontaktierungsebene axial verstellt wird und das Schubkontaktteil (46) bei einer Schubbewegung des Betätigungsgliedes (12) gegenüber der Kontaktierungsebene axial verstellt wird, **dadurch gekennzeichnet, dass** zur axialen Verstellung das Schubkontaktteil (46) im Bereich der Kontaktierungsebene (48) oder in einem der Kontaktierungsebene (48) nahegelegenen Bereich, in dem sich Kontaktfedern befinden, direkt von dem Betätigungsglied (12), oder indirekt über einen Mitnehmer (22), beaufschlagt wird.

2. Elektrischer Dreh- und Schubschalter (10) nach Anspruch 1, **dadurch gekennzeichnet, dass** das Schubkontaktteil (46) auf der dem Betätigungsglied (12), oder dem Mitnehmer (22), zugewandten Seite einen in axialer Richtung die Kontaktierungsebene (48) überragenden Vorsprung (50) aufweist.

3. Elektrischer Dreh- und Schubschalter (10) Anspruch 2, **dadurch gekennzeichnet, dass** der Vorsprung (50) in radialer Richtung hin zur Kontaktierungsebene (48) ausgebildet ist.

4. Elektrischer Dreh- und Schubschalter (10) nach Anspruch 1, 2 oder 3, **dadurch gekennzeichnet, dass** die Kontaktierungsebene (48) im Bereich der Gehäuselängsachse (16) liegt, wobei das Betätigungsglied (12), oder der Mitnehmer (22), einen in axialer Richtung verlaufenden Vorsprung (44) zur Beaufschlagung des Schubkontaktteils (46) aufweist.

5. Elektrischer Dreh- und Schubschalter (10) nach einem der vorhergehenden Ansprüche, **dadurch gekennzeichnet, dass** zwischen dem Betätigungsglied (12) und dem Schubkontaktteil (46) der Mitnehmer (22) vorgesehen ist, der mit dem Betätigungsglied (12) dreh- und schubgekoppelt und mit dem Schubkontaktteil (46) lediglich schubgekoppelt ist.

6. Elektrischer Dreh- und Schubschalter (10) nach einem der vorhergehenden Ansprüche, **dadurch gekennzeichnet, dass** das Betätigungsglied (12) oder der Mitnehmer (22) auf seiner dem Schubkontaktteil (46) zugewandten Seite einen sich in axialer Richtung erstreckenden Anlageabschnitt (44) aufweist, an dem ein diesem Anlageabschnitt (44) zugewandter Anlageabschnitt (50) des Schubkontaktteils (46) anliegt, wobei das Schubkontaktteil (46) bei Drehbewegung des Betätigungsglieds (12) unbeeinflusst bleibt.

7. Elektrischer Dreh- und Schubschalter (10) nach Anspruch 6, **dadurch gekennzeichnet, dass** das Schubkontaktteil (46) auf der dem Anlageabschnitt (50) abgewandten Seite von einem Federelement (52) gegen das Betätigungsglied (12) oder den Mitnehmer (22) federbeaufschlagt ist.

8. Elektrischer Dreh- und Schubschalter (10) nach einem der vorhergehenden Ansprüche, **dadurch gekennzeichnet, dass** der Mitnehmer (22) eine Verzahnung (26) aufweist, die mit einer Gegenverzahnung (30) eines Funktionselements (28) drehgekoppelt und nicht schubgekoppelt ist, wobei das Funktionselement (28) eine schraubenlinienförmige Steuerbahn (32) aufweist, die mit einem am Drehkontaktteil (36) vorgesehenen Steuerzapfen (34) zusammenwirkt.

9. Elektrischer Dreh- und Schubschalter (10) nach Anspruch 8, **dadurch gekennzeichnet, dass** Funktionselement (28) hülsenartig ausgebildet ist und das Schubkontaktteil (46) so umgibt, dass es beim Drehen des Betätigungsgliedes (12) unbeeinflusst bleibt.

10. Elektrischer Dreh- und Schubschalter (10) nach Anspruch 1 oder nach einem der vorhergehenden Ansprüche, **dadurch gekennzeichnet, dass** Schaltkontakte (18) des Schubkontaktteils (46) eine auf der einen Seite einer im Gehäuse angeordneten Leiterplatte (42) liegende Kontaktierungsebene (48) und Schaltkontakte des Drehkontaktteils (36) eine auf der anderen Seite der Leiterplatte (42) liegende Kontaktierungsebene (40) kontaktieren.

11. Elektrischer Dreh- und Schubschalter (10) nach Anspruch 10, **dadurch gekennzeichnet, dass** das Schubkontaktteil (46) dem Drehkontaktteil (36) gegenüberliegend angeordnet ist.

12. Elektrischer Dreh- und Schubschalter (10) nach einem der vorhergehenden Ansprüche, **dadurch gekennzeichnet, dass** ein gegenüber dem Gehäuse um die Gehäuselängsachse (16) drehbar gelagerter Betätigungsabschnitt (62) vorgesehen ist, der mit einem zweiten Drehkontaktteil (74) derart gekoppelt ist, dass das zweite Drehkontaktteil (74) bei Drehbewegung des Betätigungsabschnitts (62) axial verstellt wird.

13. Elektrischer Dreh- und Schubschalter (10) nach Anspruch 11, **dadurch gekennzeichnet, dass** das zweite Drehkontaktteil (74) auf der gleichen Kontaktierungsebene (40) angeordnet ist wie das erste Drehkontaktteil (36).

14. Elektrischer Dreh- und Schubschalter (10) nach Anspruch 11 oder 12, **dadurch gekennzeichnet, dass** der Betätigungsabschnitt (62) eine Verzahnung (64) aufweist, die mit einer Gegenverzahnung (68) eines zweiten Funktionselements (66) drehgekoppelt und nicht schubgekoppelt ist, wobei das zweite Funktionselement (66) eine schraubenlinienförmige Steuerbahn (70) aufweist, die mit einem am zweiten Drehkontaktteil (74) vorgesehenen Steuerzapfen (72) zusammenwirkt.

15. Elektrischer Dreh- und Schubschalter (10) nach einem der vorhergehenden Ansprüche, **dadurch gekennzeichnet, dass** das Funktionsteil (66) wenigstens eine sich in axialer Richtung erstreckende Rastnase (80) bzw. Rastkontur aufweist, die mit wenigstens einer Rastkontur (81) bzw. Rastnase eines axial verschiebbar, nicht drehbar und unter Federvorspannung angeordneten Stellrings (82) zusammenwirkt.

16. Elektrischer Dreh- und Schubschalter (10) nach Anspruch 12, **dadurch gekennzeichnet, dass** der Stellring (82) von einem sich am Gehäuse abstützenden Federelement (84) vorgespannt wird.

17. Elektrischer Dreh- und Schubschalter (10) nach Anspruch 12 oder 13, **dadurch gekennzeichnet, dass** der Stellring (82) auf seiner radialen Innenseite axiale Führungsstege (86) aufweist, die in am Gehäuse vorgesehenen axialen Führungsnuten (88) angeordnet sind.

## Claims

1. Electric rotary push switch (10), in particular for a vehicle, comprising at least one actuating member (12) mounted on a housing and rotatable about the housing longitudinal axis (16) and displaceable parallel to the housing longitudinal axis (16), with at least one rotary contact part (36) mounted in the housing and one push contact part (46) mounted in the housing, wherein on a rotation movement of the actuating member (12), the rotary contact part (36) is axially displaced relative to a contact plane and on a push movement of the actuating member (12), the push contact part (46) is axially displaced relative to the contact plane, **characterised in that** for axial displacement, the push contact part (46) is acted upon in the region of the contact plane (48) or in a region adjacent to the contact plane (48) in which contact springs are situated, directly by the actuating member (12) or indirectly via a pusher (22).

2. Electric rotary push switch (10) according to claim 1, **characterised in that** the push contact part (46) has a projection (50) extending in the axial direction beyond the contact plane (48) on the side facing towards the actuating member (12) or the pusher (22).

3. Electric rotary push switch (10) according to claim 2, **characterised in that** the projection (50) is constructed in the radial direction towards the contact plane (48).

4. Electric rotary push switch (10) according to claim 1, 2 or 3, **characterised in that** the contact plane (48) lies in the region of the housing longitudinal axis (16), wherein the actuating member (12) or the pusher (22) has a projection (44) extending in the axial direction for acting upon the push contact part (46).

5. Electric rotary push switch (10) according to one of the preceding claims, **characterised in that** the pusher (22) is provided between the actuating member (12) and the push contact part (46), said pusher being coupled in rotating and pushing manner to the actuating member (12) and being coupled in pushing manner only to the push contact part (46).

6. Electric rotary push switch (10) according to one of the preceding claims, **characterised in that** the actuating member (12) or the pusher (22) has on its side facing towards the push contact part (46) a locating section (44) extending in the axial direction, against which a locating section (50) of the push contact part (46) facing towards this locating section (44) lies wherein, on a rotation movement of the actuating member (12), the push contact part (46) remains unaffected.

7. Electric rotary push switch (10) according to claim 6, **characterised in that** on the side facing away from the locating section (50), the push contact part (46) is spring-loaded by a spring element (52) against the actuating member (12) or the pusher (22).

8. Electric rotary push switch (10) according to one of the preceding claims, **characterised in that** the pusher (22) has toothing (26) which is rotationally coupled and not push-coupled to countertoothing (30) of a function element (28), wherein the function element (28) has a helically-shaped control path (32) which cooperates with a control pin (34) provided on the rotary contact part (36).

9. Electric rotary push switch (10) according to claim 8, **characterised in that** the function element (28) is formed sleeve-shaped and surrounds the push contact part (46) in such a manner that on rotation of the actuating member (12), it remains unaffected.

10. Electric rotary push switch (10) according to claim 1 or according to one of the preceding claims, **characterised in that** switching contacts (18) of the push contact part (46) contact a contact plane (48) lying on one side of a conductor plate (42) arranged in the housing and switching contacts of the rotary contact part (36) contact a contact plane (40) lying on the other side of the conductor plate (42).

11. Electric rotary push switch (10) according to claim 10, **characterised in that** the push contact part (46) is arranged opposing the rotary contact part (36).

12. Electric rotary push switch (10) according to one of the preceding claims, **characterised in that** an actuating section (62) is provided which is mounted rotatable relative to the housing about the housing longitudinal axis (16), said actuating section being coupled to a second rotary contact part (74) in such a manner that the second rotary contact part (74) is axially displaced on a rotation movement of the actuating section (62).

13. Electric rotary push switch (10) according to claim 11, **characterised in that** the second rotary contact part (74) is arranged on the same contact plane (40) as the first rotary contact part (36).

14. Electric rotary push switch (10) according to claim 11 or 12, **characterised in that** the actuating section (62) has toothing (64) which is rotationally coupled and not push-coupled to countertoothing (68) of a second function element (66), wherein the second function element (66) has a helically-shaped control path (70) which cooperates with a control pin (72) provided on the second rotary contact part (74).

15. Electric rotary push switch (10) according to one of the preceding claims, **characterised in that** the function part (66) has at least one detent lug (80) or detent contour extending in the axial direction which cooperates with at least one detent contour (81) or detent lug of an axially displaceable positioning ring (82) which is arranged non-rotatably under spring pre-tension.

16. Electric rotary push switch (10) according to claim 12, **characterised in that** the positioning ring (82) is pre-tensioned by a spring element (84) which is supported against the housing.

17. Electric rotary push switch (10) according to claim 12 or 13, **characterised in that** the positioning ring (82) has axial guide webs (86) on its radially internal side, said guide webs being arranged in guide grooves (88) provided on the housing.

## Revendications

1. Commutateur tourner-pousser (10), en particulier pour un véhicule, avec au moins un organe de commande (12) logé sur un carter, en rotation autour de l'axe longitudinal du carter (16) et mobile parallèlement à l'axe longitudinal du carter (16), avec au moins une pièce de contact rotative (36) et une pièce de contact de poussée (46) montée dans le carter, la pièce de contact rotative (36) étant déplacée axialement par rapport au plan de mise en contact lors d'un mouvement de rotation de l'organe de commande (12) et la pièce de contact de poussée (46) étant déplacée axialement par rapport au plan de mise en contact, lors d'un mouvement de poussée de l'organe de commande (12), **caractérisé en ce que** pour un déplacement axial, la pièce de contact de poussée (46) est sollicitée directement par l'organe de commande (12) ou indirectement par un entraîneur (22), dans une zone située au plan de mise en contact (48) ou à proximité du plan de mise en contact (48) dans laquelle se trouvent des ressorts de contact.

2. Commutateur électrique tourner-pousser (10) selon la revendication 1, **caractérisé en ce que** la pièce de contact de poussée (46) présente sur la face tournée vers l'organe de commande (12) ou l'entraîneur (22), une pièce en saillie (50) au-dessus du plan de mise en contact (48), dans la direction axiale.

3. Commutateur électrique tourner-pousser (10) selon la revendication 2, **caractérisé en ce que** la pièce en saillie (50) est conçue orientée vers le plan de mise en contact (48) dans le sens radial.

4. Commutateur électrique tourner-pousser (10) selon l'une quelconque des revendications 1, 2 ou 3, **caractérisé en ce que** le plan de mise en contact (48) se trouve dans la zone de l'axe longitudinal du carter (16), l'organe de commande (12) ou l'entraîneur (22) présentant une pièce en saillie (44) s'étendant dans le sens axial, afin de solliciter la pièce de contact de poussée (46).

5. Commutateur électrique tourner-pousser (10) selon l'une quelconque des revendications précédentes, **caractérisé en ce qu'**entre l'organe de commande (12) et la pièce de contact de poussée (46) est prévu l'entraîneur (22), couplé en rotation et en poussée avec l'organe de commande (12) et uniquement couplé en poussée avec la pièce de contact de poussée (46).

6. Commutateur électrique tourner-pousser (10) selon l'une quelconque des revendications précédentes, **caractérisé en ce que** l'organe de commande (12) ou l'entraîneur (22) présente sur sa face tournée vers la pièce de contact de poussée (46), une partie d'appui (44) s'étendant dans le sens axial sur laquelle s'appuie, tournée vers ladite partie d'appui (44), une partie d'appui (50) de la pièce de contact de poussée (46), la pièce de contact de poussée (46) n'étant pas influencée en cas de mouvement de rotation de l'organe de commande (12).

7. Commutateur électrique tourner-pousser (10) selon la revendication 6, **caractérisé en ce que** la pièce de contact de poussée (46) est agencée avec une sollicitation élastique par un élément à ressort (52) contre l'organe de commande (12) ou l'entraîneur (22), sur la face opposée à la partie d'appui (50).

8. Commutateur électrique tourner-pousser (10) selon l'une quelconque des revendications précédentes, **caractérisé en ce que** l'entraîneur (22) présente une denture (26) couplée en rotation et non en poussée avec la denture complémentaire (30) d'un élément fonctionnel (28), ledit élément fonctionnel (28) comportant une voie de commande (32) de forme hélicoïdale coopérant avec un tourillon de commande (34) prévu sur la pièce de contact rotative (36).

9. Commutateur électrique tourner-pousser (10) selon la revendication 8, **caractérisé en ce que** l'élément fonctionnel (28) est conformé en manchon et entoure la pièce de contact de poussée (46) de manière à ne pas l'influencer lors de la rotation de l'organe de commande (12).

10. Commutateur électrique tourner-pousser (10) selon la revendication 1 ou selon l'une quelconque des revendications précédentes, **caractérisé en ce que** les contacts de commutation (18) de la pièce de contact de poussée (46) sont mis en contact avec un plan de mise en contact (48) situé sur l'une des faces d'un circuit imprimé (42) disposé dans le carter et les contacts de commutation de la pièce de contact rotative (36) avec le plan de mise en contact (40) situé sur l'autre face du circuit imprimé (42).

11. Commutateur électrique tourner-pousser (10) selon la revendication 10, **caractérisé en ce que** la pièce de contact de poussée (46) est disposée face à la pièce de contact rotative (36).

12. Commutateur électrique tourner-pousser (10) selon l'une quelconque des revendications précédentes, **caractérisé en ce qu'**est prévue une partie de commande (62) logée de manière rotative autour de l'axe longitudinal du carter (16), opposée au carter, ladite partie étant couplée en rotation avec une seconde pièce de contact rotative (74) de sorte que la seconde pièce de contact rotative (74) se déplace axialement lors du mouvement de rotation de la partie de commande (62).

13. Commutateur électrique tourner-pousser (10) selon la revendication 11, **caractérisé en ce que** la seconde pièce de contact rotative (74) est agencée sur le même plan de mise en contact (40) que la première pièce de contact rotative (36).

14. Commutateur électrique tourner-pousser (10) selon l'une quelconque des revendications 11 ou 12, **caractérisé en ce que** la partie de commande (62) présente une denture (64) couplée en rotation et non en poussée avec la denture complémentaire (68) d'un second élément fonctionnel (66), le second élément (66) comportant une voie de commande (70) de forme hélicoïdale qui coopère avec un tourillon de commande (72) prévu sur la seconde pièce de contact rotative (74).

15. Commutateur électrique tourner-pousser (10) selon l'une quelconque des revendications précédentes, **caractérisé en ce que** la partie fonctionnelle (66) comporte au moins un bec d'encliquetage (80) ou un contour d'encliquetage s'étendant en direction axiale, coopérant au moins avec le contour d'encliquetage (81) ou le bec d'encliquetage d'une bague de réglage (82) mobile axialement, non rotative et soumise à la précontrainte d'un ressort.

16. Commutateur électrique tourner-pousser (10) selon la revendication 12, **caractérisé en ce que** la bague de réglage (82) est précontrainte par un élément à ressort (84) s'appuyant sur le carter.

17. Commutateur électrique tourner-pousser (10) selon l'une quelconque des revendications 12 ou 13, **caractérisé en ce que** la bague de réglage (82) présente sur sa face radiale intérieure des traverses de guidage (86) axiales qui sont disposées sur des rainures de guidage (88) axiales prévues sur le carter.
